# EUROPEAN PATENT APPLICATION

(11) **EP 4 576 349 A1**
(43) Date of publication of application: **25.06.2025**
(21) Application number: 23857468.5
(22) Date of filing: 13.04.2023
(51) Int. Cl.: H01M 50/148, H01M 50/167, H01M 50/178, H01M 50/105, H01M 50/211

(54) **BATTERY CELL AND BATTERY MODULE COMPRISING SAME**

(30) Priority: 22.08.2022 KR 20220104942
(71) Applicant: SK On Co., Ltd., Seoul 03161 (KR)
(72) Inventor: HWANG, Ho Jin, Daejeon 34124 (KR); KIM, Young Ha, Daejeon 34124 (KR); KIM, Ji Hyung, Daejeon 34124 (KR); LEE, Sang Bin, Daejeon 34124 (KR)
(74) Representative: Stolmár & Partner Patentanwälte PartG mbB
(86) International application number: PCT/KR2023/005039
(87) International publication number: WO 2024/043427

(57) **Abstract**

The present invention, in order to improve stability by directing a venting direction, provides a battery cell and a battery module comprising same, comprising: an electrode assembly; a case for accommodating the electrode assembly; an electrode terminal electrically connected to the electrode assembly; and a sealing portion to which an edge of the case is joined, wherein the sealing portion comprises a first sealing portion in which the electrode terminal is embedded and a second sealing portion in which the electrode terminal is not embedded, a folding portion is formed on at least a part of the second sealing portion, and a holding member coupled to the folding portion is included.

## Description

### [Technical Field]

The present invention relates to a battery cell and a battery module including the same.

### [Background Art]

As the electronics, communications, and space industries develop, demand for lithium secondary batteries as an energy power source is drastically increasing. In particular, as the importance of global eco-friendly policies is emphasized, the electric vehicle market is growing swiftly, and research and development on lithium secondary batteries are being actively conducted worldwide.

Among various secondary batteries, research and development is being conducted most actively on lithium secondary batteries that have high discharge voltage and energy density. These lithium secondary batteries are manufactured by accommodating an electrode assembly including an anode, a cathode, and a separator in a highly flexible pouch-type case, and then heat-welding the edges of the pouch-type case. However, when lithium secondary batteries are used for a long period of time or exposed to high-temperature environments, a gas may be generated inside the case, causing a venting phenomenon. At this time, since the direction in which the gas is vented is not constant, combustibles such as high-temperature electrolyte solutions and gases may be transferred to adjacent secondary batteries, causing a fire. In addition, when secondary batteries are applied to electric vehicles, the venting direction is not constant, causing a problem in which the flames spread toward a driver in the event of a fire.

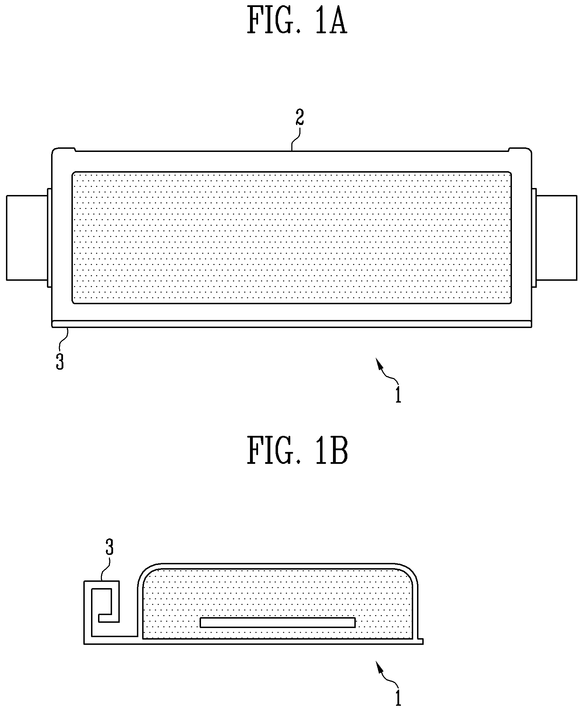

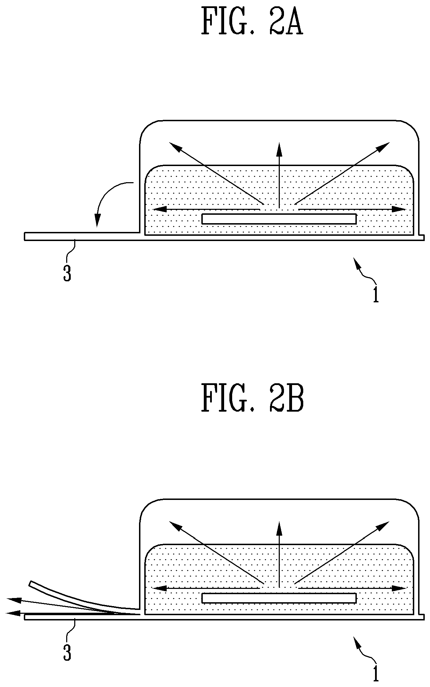

In this way, in order to improve the stability of secondary batteries, it is important to direct the direction in which a gas is vented. FIGS. 1A and 1B schematically illustrate a conventional battery case including a folding portion formed therein, and FIGS. 2A and 2B schematically illustrate a conventional battery case including a folding portion formed therein.

Referring to FIGS. 1 and 2, a battery cell 1 includes a case 2 accommodating an electrode assembly and a folding portion 3 formed at an edge of the case 2. A folding portion 3 is a structure for increasing the stability of a case 2 and directing a venting direction. However, even when the folding portion was formed at an edge of the case, the phenomenon in which the folding portion was easily unfolded due to the increase in the internal pressure of the battery cell (FIG. 2A) occurred, and the seal of the case was released through the unfolded folding portion (FIG. 2B), so that the direction in which a gas was vented could not be directed.

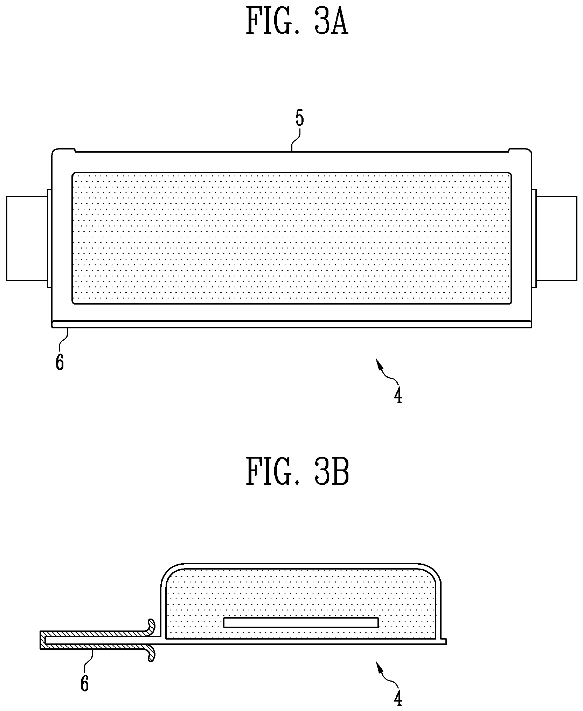

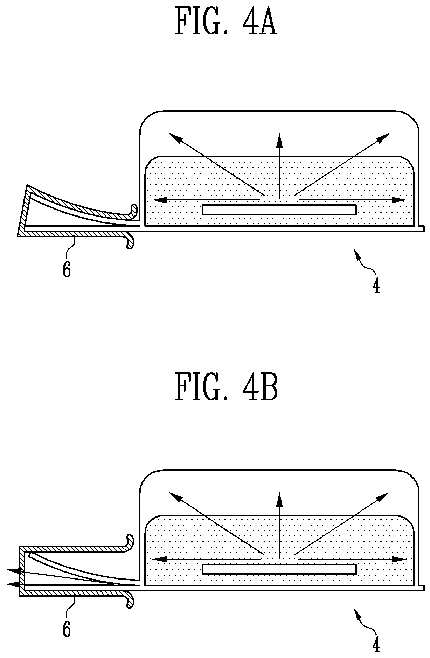

FIGS. 3A and 3B schematically illustrate a conventional battery case having a tape formed therein, and FIGS. 4A and 4B schematically illustrate a conventional battery case having a tape formed therein.

FIGS. 3 and 4 schematically illustrate a conventional battery case including a tape formed therein. Referring to FIGS. 3 and 4, a battery cell 4 includes a case 5 accommodating an electrode assembly and a tape 6 formed on an edge of the case 5. A tape 6 is a structure for increasing the stability of a case 5 and directing a venting direction. However, even when the tape was formed on an edge of the case, a sealing portion was easily broken due to an increase in the internal pressure of the battery cell (FIG. 4A), and the seal of the case was released through the broken sealing portion (FIG. 4B), so that the direction in which a gas was vented could not be directed.

In addition, a method of forming not only a sealing portion but also a holding member in a body portion of a battery cell was devised to further increase the stability of a case and direct a venting direction. However, due to the holding member, pressure was applied to the body portion of the cell including an electrode assembly, resulting in problems such as detachment of an electrode, precipitation of lithium ions (Li-plating), or increase in internal resistance of the battery cell due to fracture of the case, or occurrence of a fire.

In this way, a technology is required that can improve the stability of a battery cell by directing the direction in which venting occurs, without applying pressure to a body portion of a battery cell.

### [Disclosure]

### [Technical Problem]

The present invention provides a battery cell capable of improving stability by directing a venting direction and a battery module including the same.

### [Technical Solution]

A battery cell according to the present invention includes: an electrode assembly; a case accommodating the electrode assembly; an electrode terminal electrically connected to the electrode assembly; and a sealing portion to which an edge of the case is joined, wherein the sealing portion includes: a first sealing portion in which the electrode terminal is embedded, a second sealing portion in which the electrode terminal is not embedded; a folding portion formed on at least a part of the second sealing portion; and a holding member coupled to the folding portion.

In one embodiment of the present invention, the folding portion may be formed long in the direction of the overall length of the battery cell

In one embodiment of the present invention, the holding member may be coupled to the entire folding portion.

In one embodiment of the present invention, the holding member may be detachably coupled to the folding member.

In one embodiment of the present invention, the holding member may accommodate the folding portion.

In one embodiment of the present invention, the holding member may be in the form of an integrated clamp.

In one embodiment of the present invention, the holding member may pressurize the folding portion with an elastic force.

In one embodiment of the present invention, the width of an upper part of the holding member may be wider than the width of the lower part, and the holding member may form an inclined surface in the direction from the upper part to the lower part, based on the height direction of the battery cell.

In one embodiment of the present invention, the holding member may include a wing portion extending from the lower part, and the folding portion may be pressurized by the inclined surface and the wing portion.

In one embodiment of the present invention, the holding portion may be in the form of a separable clamp.

In one embodiment of the present invention, the form of the separable clamp may include an upper member and a lower member, and the folding portion may be gripped between the upper member and the lower member.

In one embodiment of the present invention, the upper portion may surround the folding portion, and the lower portion may be inserted into a hollow space formed in the folding portion.

In one embodiment of the present invention, wherein the holding portion may include an insulating material.

A battery module according to the present invention includes the battery cell.

### [Advantageous Effects]

The present invention includes a folding portion and a holding member coupled to the folding portion in a sealing portion of a battery cell, thereby improving the durability of the folding portion and directing venting to occur in the direction of an electrode terminal. As a result, when a fire occurs in some battery cells, the risk of fire spreading to adjacent battery cells or flames spreading toward a vehicle driver can be reduced.

In addition, the present invention has a structure in which a holding member coupled to a folding portion is detachable, and the shape of a folding portion does not need to be specified, so that the production conditions of battery cells can be easily changed, and the folding portion is applicable to battery cells that have already been manufactured.

In addition, the present invention has an effect in that a holding member is not coupled to a body portion of a battery cell, so that it does not cause problems such as an increase in internal resistance or a decrease in stability due to pressurization of the body portion of the battery cell.

### [Description of Drawings]

FIGS. 1A and 1B schematically illustrate a conventional battery case including a folding portion formed therein.
FIGS. 2A and 2B schematically illustrate a conventional battery case including a folding portion formed therein.
FIGS. 3A and 3B schematically illustrate a conventional battery case having a tape formed therein.
FIGS. 4A and 4B schematically illustrate a conventional battery case having a tape formed therein.
FIGS. 5A and 5B schematically illustrate a plan view and a side view of a battery cell according to one embodiment of the present invention.
FIG. 6 schematically illustrates a holding member in the form of an integrated clamp according to one embodiment of the present invention.
FIG. 7 schematically illustrates a holding member in the form of a separate clamp according to another embodiment of the present invention.
FIGS. 8A to 8C schematically illustrate a lower member and an upper member of a separate clamp form inserted into a hollow space.
FIGS. 9A and 9B schematically illustrate perspective views of an integrated clamp type and a separate clamp type.

### [Modes of the Invention]

The structural or functional descriptions of embodiments disclosed in the present specification or application are merely illustrated for the purpose of explaining embodiments according to the technical principle of the present invention, and embodiments according to the technical principle of the present invention may be implemented in various forms in addition to the embodiments disclosed in the specification or application. **In** addition, the technical principle of the present invention is not construed as being limited to the embodiments described in the present specification or application.

Hereinafter, a battery cell according to the present invention and a battery module including the same will be described in detail.

A battery cell according to the present invention includes: an electrode assembly; a case accommodating the electrode assembly; an electrode terminal electrically connected to the electrode assembly; and a sealing portion to which an edge of the case is joined, wherein the sealing portion includes: a first sealing portion in which the electrode terminal is embedded, a second sealing portion in which the electrode terminal is not embedded; a folding portion formed on at least a part of the second sealing portion; and a holding member coupled to the folding portion.

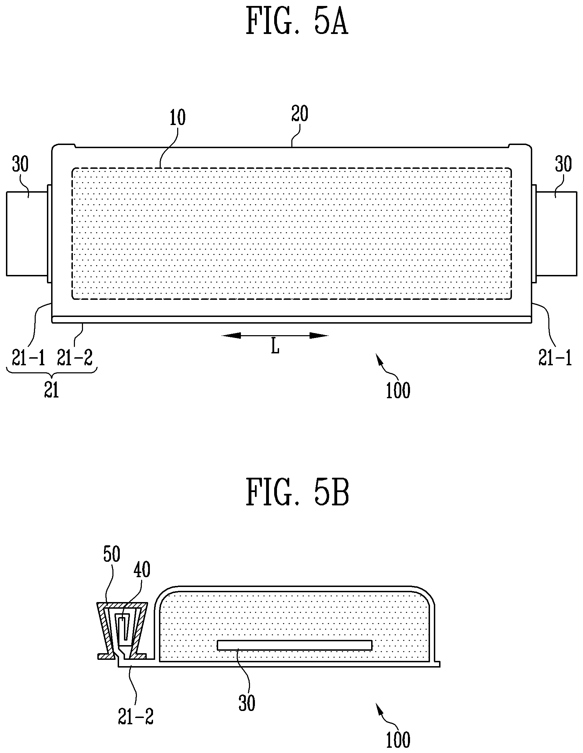

FIGS. 5A and 5B schematically illustrate a plan view and a side view of a battery cell according to one embodiment of the present invention.

Referring to FIG. 5, a battery cell 100 according to the present invention includes an electrode assembly 10. An electrode assembly 10 may include a cathode, an anode, and a separator embedded between the cathode and the anode. A cathode may include a cathode active material which lithium (Li) ions may be inserted to and extracted from, and an anode may include an anode active material which lithium (Li) ions may be absorbed to and extracted from. In addition, a cathode and an anode may further include a binder and a conductive material in each of a cathode active material and an anode active material to improve mechanical stability and electrical conductivity. A separator may be configured to prevent electrical short-circuit between a cathode and an anode and to generate a flow of ions. The type of the separator is not particularly limited, but may include a porous polymer film. An electrode assembly may be manufactured by alternately stacking a plurality of cathodes and anodes and interposing separators between the cathodes and anodes, by a stacking or zigzag stacking method.

A battery cell 100 according to an embodiment of the present invention may further include an electrolyte solution. An electrolyte solution may be a non-aqueous electrolyte solution. An electrolyte solution may include a lithium salt and an organic solvent. For example, the organic solvent may include one or more selected from the group consisting of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

A battery cell 100 according to the present invention includes a case 20 accommodating an electrode assembly 10. A case 20 may be a pouch made of a flexible material. A case 20 may include a lower sheet including a cup portion formed therein for accommodating an electrode assembly 10 and an upper sheet covering the lower sheet. Ae cup portion may prevent an electrode assembly 10 from being separated out of a case 20. A lower sheet and an upper sheet may protect an electrode assembly 10 from an external environment. A lower sheet and an upper sheet may include a water-resistant resin, and may be, for example, in the form of a film in which a polyolefin-based resin, a metal, a nylon resin, and a polyterephthalate resin are laminated.

A battery cell 100 according to the present invention includes an electrode terminal 30 electrically connected to an electrode assembly 10, and a sealing portion 21 to which an edge of a case 20 is joined. An electrode terminal 30 may be a cathode terminal electrically connected to a plurality of cathodes included in an electrode assembly 10, or a negative terminal electrically connected to a plurality of anodes included in the electrode assembly 10. In FIG. 5A, electrode terminals are illustrated as being formed on different sides, but are not limited thereto and may be formed on a same side. A sealing portion 21 may be formed by joining edges of the inner surfaces of a lower sheet and an upper sheet to prevent an electrode assembly 10 from being separated from a case 20. The method of forming a sealing portion 21 is not particularly limited, but may be formed by heat-fusing a polyolefin resin formed on the inner surfaces of a lower sheet and an upper sheet.

A sealing portion includes a first sealing portion 21-1 in which an electrode terminal 30 is embedded and a second sealing portion 21-2 in which an electrode terminal 30 is not embedded, and a folding portion 40 is formed in at least a portion of the second sealing portion 21-2. A folding portion 40 may prevent a second sealing portion 21-2 from being fractured by a gas generated inside a case 20. A folding portion 40 may be formed by folding a second sealing portion 21-2 by 90 degrees, 180 degrees, 270 degrees, or 360 degrees. In addition, a folding portion 40 may be formed long in the overall length direction L of a battery cell 100.

A battery cell 100 according to the present invention may include a holding member 50 coupled to a folding portion 40, and the holding member 50 may be coupled to the entire folding portion 40. A holding member 50 may accommodate a folding portion 40 so that the folding portion 40 is not exposed to the outside. A holding member 50 coupled to a folding portion 40 prevents the folding portion 40 from be unfolded due to gas pressure generated inside a case 20, so that venting may occur in the direction of a first sealing member 21-1 in which an electrode terminal 30 is embedded, rather than a second sealing member 21-2. Since venting is directed in a specific direction, when a fire occurs in some battery cells, the risk of fire spreading to adjacent battery cells or flames spreading toward a vehicle driver can be reduced.

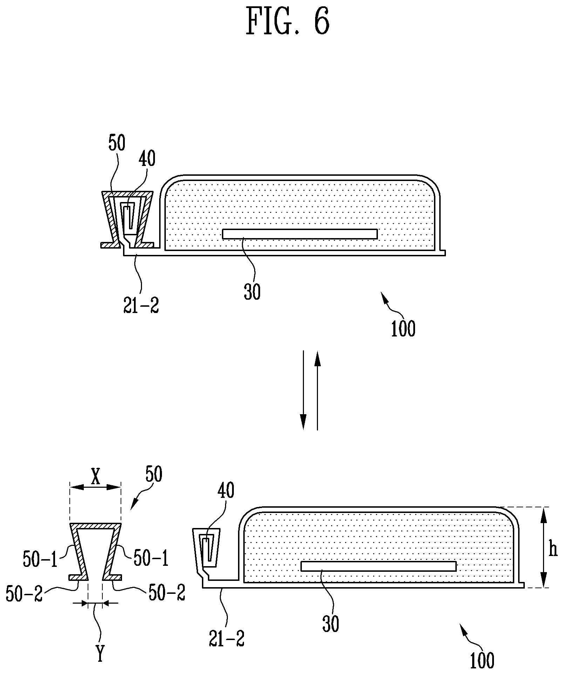

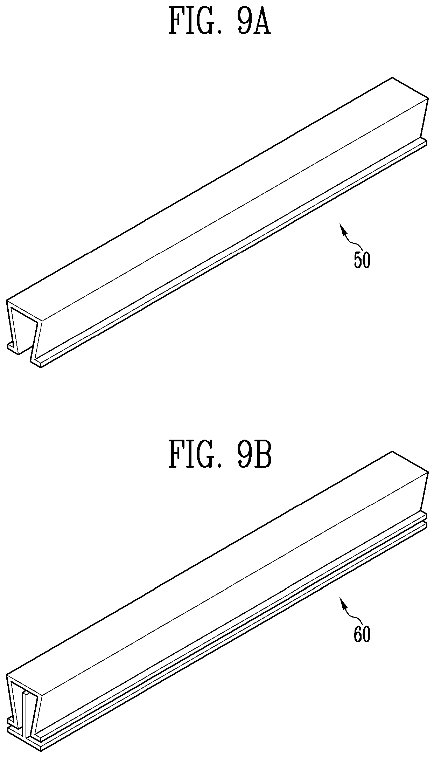

FIG. 6 and FIG. 9A schematically illustrate a holding member in the form of an integrated clamp according to one embodiment of the present invention.

Referring to FIG. 6 and FIG. 9A, a holding member 50 may be in the form of an integrated clamp and may be detachably coupled to a folding portion 40. A holding member 50 is not a structure that is integrally coupled to a folding portion 40, but is detachable as needed, and the shape of the folding portion 40 does not need to be specified. Therefore, it is easy to change the production conditions of battery cells, and the folding portion is applicable to battery cells that have already been manufactured. In addition, a holding member 50 is not coupled to a body portion of a battery cell 100, but is only locally coupled to a folding portion 40, so there is an effect that it does not cause problems such as an increase in internal resistance and a decrease in stability due to pressurization of the body portion of the battery cell due to pressure applied to the body portion of the battery cell (area where an electrode assembly is accommodated).

A holding member 50 may pressurize a folding portion 40 by an elastic force. Specifically, the width (X) of an upper portion of a holding member 50 is wider than the width (Y) of a lower portion based on the height direction (h) of a battery cell 100, and an inclined surface 50-1 may be formed in the direction from the upper portion to the lower portion. **In** addition, a holding member 50 may include a wing portion 50-2 extending from a lower portion, and a folding portion 40 may be pressurized by an inclined surface 50-1 and the wing portion 50-2.

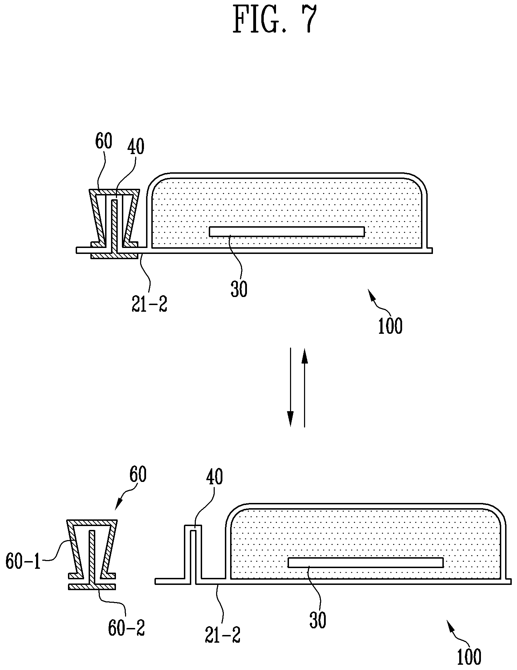

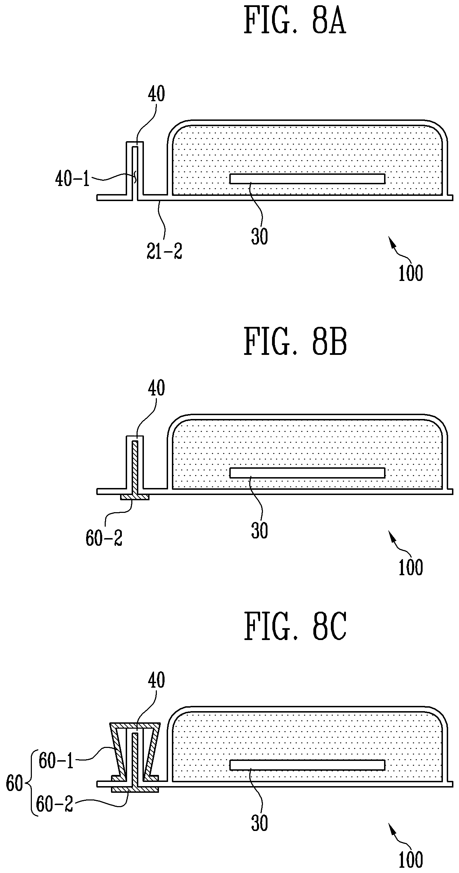

FIG. 7 and FIG. 9B schematically illustrate a holding member in the form of a separate clamp according to another embodiment of the present invention, and FIGS. 8A to 8C schematically illustrate a lower member and an upper member of a separate clamp form inserted into a hollow space.

Referring to FIGS. 7, 8 and 9B, a holding member 60 may be in the form of a separable clamp and may be detachably coupled to a folding portion 40. Specifically, a form of a separate clamp may include an upper member 60-1 and a lower member 60-2, and a folding member 40 may be gripped between the upper member 60-1 and the lower member 60-2. In addition, an upper member 60-1 may surround a folding member 40, and a lower member 60-2 may be inserted into a hollow space 40-1 formed in the folding portion 40. For example, a holding member 60 in the form of a separable clamp may be coupled to a folding portion 40 by a step of forming a folding portion 40 including a hollow space 40-1 formed therein by folding a second sealing portion 21-2 clockwise or counterclockwise (FIG. 8A), a step of inserting a lower member 60-2 in the form of a separable clamp into the hollow space 40-1 (FIG. 8B), and a step of attaching an upper member 60-1 in the form of a separable clamp onto the folding portion 40 so that the folding portion 40 is gripped between the upper member 60-1 and the lower member 60-2 (FIG. 8C). A holding member 60 in the form of a detachable clamp is bonded to a folding member 40 more strongly, so that the folding member 40 can be more effectively prevented from being unfolded due to gas pressure generated inside a case 20.

A holding member 50 and 60 may be formed of a material having rigidity that is not easily deformed in shape by an external force. Preferably, a holding member 50 and 60 may include an insulating material. Since the insulating properties of a folding portion 40 are secured by a holding member 50 and 60 including an insulating material, a battery cell 100 may have excellent insulating properties.

A battery module according to the present invention includes the battery cell of the present invention as a unit cell. A battery module may include a battery cell stack in which a plurality of battery cells are stacked, and a heat dissipation plate. A heat dissipation plate may be a cooling plate, and a battery cell stack may be cooled by the heat dissipation plate. A heat dissipation plate may be disposed on an upper portion, a lower portion, side portions, and the like of a battery cell stack. A battery cell stack may be formed by stacking battery cells in a horizontal direction or a vertical direction. A battery cell according to the present invention includes a structure in which venting may occur in the direction of an electrode terminal. Therefore, even when venting occurs in a battery cell, a gas is generated in a controllable direction within the battery module, so that when a fire occurs in some battery cells, the risk of fire spreading to adjacent battery cells or flames spreading toward a vehicle driver can be reduced.

### [Reference numerals]

10: Electrode assembly
20: Case
21: Sealing portion
21-1: First sealing portion
21-2: Second sealing portion
30: Electrode terminal
40: Folding portion
50, 60: Holding member
100: Battery cell

## Claims

1. A battery cell comprising:
an electrode assembly;
a case accommodating the electrode assembly;
an electrode terminal electrically connected to the electrode assembly; and
a sealing portion to which an edge of the case is joined,
wherein the sealing portion includes: a first sealing portion in which the electrode terminal is embedded, a second sealing portion in which the electrode terminal is not embedded; a folding portion formed on at least a part of the second sealing portion; and a holding member coupled to the folding portion.

2. The battery cell according to claim 1, wherein the folding portion is formed long in the direction of the overall length of the battery cell.

3. The battery cell according to claim 1, wherein the holding member is coupled to the entire folding portion.

4. The battery cell according to claim 1, wherein the holding member is detachably coupled to the folding portion.

5. The battery cell according to claim 1, wherein the holding member accommodates the folding portion.

6. The battery cell according to claim 1, wherein the holding member is in the form of an integrated clamp.

7. The battery cell according to claim 1, wherein the holding member pressurizes the folding portion with an elastic force.

8. The battery cell according to claim 1, wherein the width of an upper part of the holding member is wider than the width of the lower part, and the holding member forms an inclined surface in the direction from the upper part to the lower part, based on the height direction of the battery cell.

9. The battery cell according to claim 8, wherein the holding member includes a wing portion extending from the lower part, and the folding portion is pressurized by the inclined surface and the wing portion.

10. The battery cell according to claim 1, wherein the holding portion is in the form of a separable clamp.

11. The battery cell according to claim 10, wherein the form of the separable clamp includes an upper member and a lower member, and the folding portion is gripped between the upper member and the lower member.

12. The battery module according to claim 11, wherein the upper member surrounds the folding portion, and the lower member is inserted into a hollow space formed in the folding portion.

13. The battery module according to claim 1, wherein the holding portion includes an insulating material.

14. A battery module comprising the battery cell of claim 1 as a unit cell.
